# EUROPEAN PATENT APPLICATION

(11) **EP 1 921 618 A1**
(43) Date of publication of application: **14.05.2008**
(21) Application number: 05804925.5
(22) Date of filing: 30.08.2005
(51) Int. Cl.: G11B 7/24

(54) **DISC-SHAPED INFORMATION CARRIER**

(71) Applicant: TROPILLO, Andrei Vladimirovich, St. Petersburg 196128 (RU)
(72) Inventor: MASOL, Igor Vitalievich, Kiev, 01021 (UA)
(74) Representative: W.P. Thompson & Co.
(86) International application number: PCT/RU2005/000441
(87) International publication number: WO 2007/027120

(57) **Abstract**

The present invention relates to a high-density disk-shaped information carrier for storing and reproducing audio-, video- or other types of digital information. The disk-shaped carrier has a center hole with a diameter substantially equal to 15 mm for holding the carrier in position in a reading device and comprises at least a molded substrate made of an optically transparent material and having its first side smooth and transparent, while a second side thereof is at least partially coated with at least two layers of materials which form, in combination with the substrate, an information side (surface) of the carrier and provide data recording and/or storing, said layers comprising at least a reflecting layer and a lacquer coat. The substrate thickness at least between the 36 mm and (D-2) mm diameters, wherein D is an outside diameter of the carrier varying from substantially 80 mm to substantially 120 mm, ranges between 0.57 and 0.67 mm. In addition, according to a first embodiment of the invention, provision is made in the substrate central area, for an annular ridge located between the 16 mm and 21.5 mm diameters over the substrate surface on the information side thereof such that a maximum distance between the plane comprising the substrate transparent surface and the upper edge of said ridge ranges from 1.6 to 1.65 mm, and the substrate thickness between the 15 mm and 16 mm diameters is substantially 1.2 mm. In accordance with a second embodiment of the invention, an annular ridge is provided in the substrate central area between the 15 mm and 18 mm diameters, said ridge being disposed over the surface of the substrate information side such that a maximum distance between the plane comprising the substrate transparent surface and the upper edge of said ridge varies from 1.6 to 1.65 mm and comprises three single-type recesses having centers spaced equally apart, while a minimum distance between the transparent substrate surface and the surface of each recess is from 1.2 to 1.25 mm. The proposed carrier made according to both embodiments of the present invention provides for a possibility of storing and/or recording and/or rewriting up to 4.7 Gb of information using up-to-date equipment operating at a laser radiation wavelength of from 630 to 650 nm, as well as up to 15 Gb and over of such information using an up-and-coming equipment at a wavelength of from 405 to 450 nm and shorter. Moreover, the proposed information carrier is **characterized by** higher manufacturability and a substantially lesser amount of errors of reproduction compared with digital media known from prior art.

## Description

### Technical Field

The present invention relates to disk-shaped information carrier for storing and reproducing audio-, video- and other types of information in a digital representation.

### Background Art

High-density disk-shaped information carriers or digital versatile disks (DVD) are well known at present and have gained widespread use heretofore the world over; each of said disks has a center hole substantially 15 mm in diameter and comprises a first molded disk-shaped substrate from an optically transparent material (predominantly, polymethylmethacrylate or polycarbonate), an additional molded disk-shaped substrate from the same material, an adhesive layer for binding said molded substrates together, as well as at least one layer of a material providing data storage and/or recording (that is, a recording layer) interposed between said adhesive layer and the surface of at least one of said substrates adjacent thereto, wherein an outside surface of at least one of said substrates is smooth and transparent (cf., e.g., ECMA standards ## 267, 268 (April, 2001), 272 (June, 1999), and 279 (December, 1998)). Depending on the amount of recording layers, single-sided (single-layer) and double-sided (double-layer) disks are recognized, wherein reading and/or recording can be effected either on one side only or on both sides of the carrier.

The aforesaid information carriers intended for storing from 1.23 Gb to 5.32 Gb of audio-, video- or other kinds of digital information and for reproducing such information using modem equipment provided with an optical reading system within a wavelength range of from 635 to 650 nm are currently regarded as most capacious media for storing and/or recording information; however, said carriers suffer from a number of disadvantages stemming from their construction arrangement and specific features of the geometry thereof.

In particular, any one of the information carriers known heretofore is extremely sensitive to flexural deformation, resulting in microslips of the substrates constituting said carrier, which in turn causes microdetaching of the recording layer from the substrate and hence the onset of flaws, that is, unreadable segments in the data bearing area of the carrier. Furthermore, smooth transparent surface of said information carrier is unprotected against damaging (in particular, scratches), which also results in the onset of errors during subsequent data reproduction. One more disadvantage inherent in single-sided DVD resides in poor adhesion of colors used for applying colorful labels, to the material the additional substrate is made from (i.e., polycarbonate or polymethylmethacrylate), as well as the fact that specific features of the surface geometry of single-sided information carrier result in rapid damage to printing plates which places substantial limitation upon printing potentialities and affects adversely the quality of printing.

Furthermore, when manufacturing DVD with two substrates bound together, use is made of a great deal of raw material (polymethylmethacrylate or polycarbonate), while the procedure itself of bonding the substrates happens to be a rather complicated task, is featured by poor climatics and takes a comparatively long period of time (up to one-third of the entire production cycle of a carrier). In addition, once the DVD substrates have been bound together, closed air bubbles are liable to form there between, which upon a change in the ambient parameters (e.g., at temperature elevation), may cause shear deformation and upset integrity of the whole structure, with the result that the information recorded on the DVD is partly lost. Thus, it is for all reasons mentioned before that the amount of spoilage occurring in DVD manufacturing may run to 10% and over.

The closest analog to the invention being claimed therein is a disk-shaped information carrier (compact disk - CD) having a center hole with a diameter substantially equal to 15 mm and comprising at least a disk-shaped substrate from an optically transparent material having a first side thereof smooth and transparent, and at least a portion of a second side of said substrate coated with at least two layers applied thereto in succession and made of materials that form, in combination with the substrate, a data bearing surface of the carrier to provide data recording and/or storage, said layers comprising at least a reflecting layer and a lacquer coat (cf., e.g. ECMA Standard Nº130, of June, 1996).

However, said known information carrier is characterized but by a comparatively low storage capacity (not exceeding 700 Mb as a rule), because the disk-shaped substrate thereof is as thin as 1.1 to 1.35 mm, thus preventing, when reproducing data recorded on the carrier, use of reading equipment with a reading laser beam wavelength of from 635 to 650 nm. On that account, characteristic dimensions of information pits and the pitch thereof in CD are much in excess of those of DVD and their amount is much less, accordingly. In addition, a comparatively higher substrate thickness (1.2 mm) results rather frequently in the onset of general stresses arising in the bulk of the substrate within the data bearing area which in turn leads to the onset of the birefringent effect and involves possible errors in data reproduction, as well as destruction of the carrier and damage to the reading equipment at data reading rates above 24x. Furthermore, on account of a comparatively considerable weight and thickness thereof, CD is rather sensitive to mutual collisions and impingement of its edge with hard surfaces resulting in scratches and spallings inflicted upon the CD edge. In addition, the known CD, as well as the DVD described before are both poorly protected against damage to their smooth transparent surface when the medium is placed with said surface down even on moderately rough surfaces (e.g., on a table, and the like), because the medium has only a single annular ridge not over 0.3 mm high over a diameter of 34 mm on the transparent side thereof, for stacking the storage media.

### Summary of the Invention

It is an object of the present invention to provide a high-density disk-shaped information carrier having new geometric characteristics and free from a majority of the afore listed disadvantages inherent in the known storage media (CD and DVD), and which is readable and/or recordable and/or re-recordable in any modem equipment using a laser beam at a wavelength of from 535 to 650 nm, as well as in an up-and-coming equipment at a wavelength of from 405 to 450 nm and shorter, and which is further characterized by a substantially smaller amount of reproduction errors due to lower stresses in the bulk of central zone of the substrate, as well as by higher performance reliability.

Said objects are accomplished due to the provision of a high-density disk-shaped information carrier having a center hole with a diameter substantially equal to 15 mm for holding the carrier in position in a reading device and comprising at least a molded substrate made of an optically transparent material and having its first side smooth and transparent and at least a portion of a second side thereof is coated with at least two layers of materials which form, in combination with the substrate, an information side of the carrier and provide data recording and/or storing, said layers comprising at least a reflecting layer and a lacquer coat, while an annular ridge or collar is provided over the substrate surface on the information side thereof on the substrate portion confined between the 16 and 21.5 mm diameters such that a maximum distance between the plane comprising the substrate transparent surface and the upper edge of said ridge is from 1.6 to 1.65 mm, and the substrate thickness at least between the 36 and (D-2) mm diameters, wherein D is an outside diameter of the carrier falling within the limits of from substantially 80 mm to substantially 120 mm, ranges within 0.57 and 0.67 mm, and that between the 15 and 16 mm diameters equals substantially 1.2 mm.

Preferably the inner surface of said ridge be cylinder-shaped and the outer surface thereof be conical, the radius of the upper edge of said surface being smaller than that of the lower edge.

Preferably the locus of the ridge surface spaced a maximum distance apart from the plane comprising the substrate transparent surface, appears as a flat ring having its outside diameter smaller than or equal to 19.5 mm and its inside diameter larger than or equal to 16 mm.

In a particular case, an annular recess may be provided in the smooth transparent surface of the substrate between the 16 mm and 20.5 mm diameters thereof, said recess having a maximum depth of from 0.6 to 0.8 mm.

In a particular case, an annular ridge or collar may be provided on the smooth transparent surface of the substrate, said ridge having a height selected from the range of from 0.15 to 0.20 mm, a width ranging substantially from 0.6 and 1.2 mm and an inside diameter being substantially 33.5 mm, or else pointlike microbulges may be spaced equally apart round a dia. 34 mm circumference on the smooth transparent surface thereof, said microbulges having a height selected from a range of from 0.15 to 0.20 mm and a width ranging substantially from 0.6 to 1.2 mm.

In a particular case, a further annular ridge or collar may be additionally provided on the smooth transparent substrate surface, said ridge having a height substantially from 0.3 to 0.5 mm, a width substantially equal to 1 mm and an inside diameter of substantially (D-2) mm, or else pointlike microbulges may be spaced equally apart round a circumference having a diameter substantially equal to (D-1.5) mm on the smooth transparent surface thereof, said microbulges having a height substantially from 0.3 to 0.5 mm and a width substantially equal to 1 mm.

A layer of protective lacquer transparent to optical radiation may be applied over the smooth transparent substrate surface provided with microbulges, said layer being applied to said surface at least between the 34 and D mm diameters.
Said objects are also accomplished due to the provision of a disk-shaped information carrier having a center hole with a diameter substantially equal to 15 mm for holding the carrier in position in a reading device and comprising at least a molded substrate made of an optically transparent material and having its first side smooth and transparent and at least a portion of a second side thereof is coated with at least two layers of materials which form, in combination with the substrate, an information side of the carrier and provide data recording and/or storing, said layers comprising at least a reflecting layer and a lacquer coat, according to a second embodiment of the invention, an annular ridge or collar is provided over the substrate surface on the information side thereof on the substrate portion confined between the 15 and 18 mm diameters such that a maximum distance between the substrate transparent surface and the upper edge of said ridge is from 1.6 to 1.65 mm, said ridge comprising three single-type recesses having centers spaced equally apart, while a minimum distance between the transparent substrate surface and the surface of each recess is from 1.2 to 1.25 mm and the substrate thickness at least between the 36 mm and (D-2) mm diameters, wherein D is an outside diameter of the medium falling within the limits of from substantially 80 mm to substantially 120 mm, ranges between 0.57 and 0.67 mm.

Preferably the outer surface of said microbulge be cone-shaped and have cutouts in the areas of the recesses, the cross-sectional diameter of said surface increasing from its upper edge towards the lower one.

It is also preferable that the locus of the ridge surface spaced a maximum distance apart from the substrate transparent surface, appears as single-type portions of a flat ring separated by hollow spaces in the areas of said recesses, an outside diameter of each such portion being 18 mm or less, and an inside diameter being 15 mm or more.

In a particular case, an annular ridge or collar may be provided on the smooth transparent substrate surface, said ridge having a height selected from the range of from 0.15 to 0.20 mm, a width substantially ranging from 0.6 to 1.2 mm, and an inside diameter of substantially 33.5 mm, or else pointlike microbulges may be spaced equally apart round a circumference having a diameter of 34 mm on the smooth transparent surface thereof, said microbulges having a height selected from 0.15 to 0.20 mm and a width ranging substantially from 0.6 to 1.2 mm.

In a particular case, one more annular ridge or collar may be further provided on the smooth transparent substrate surface, said ridge having a height substantially from 0.3 to 0.5 mm, a width substantially equal to 1 mm and an inside diameter of substantially (D-2) mm, or else a number of pointlike microbulges may be spaced equally apart round a circumference having a diameter substantially equal to (D-1.5) mm on the smooth transparent surface thereof, said microbulges having a height substantially ranging from 0.3 to 0.5 mm and a width substantially equal to 1 mm.

In a particular case, a coat of protective lacquer transparent to optical radiation may be applied over the smooth transparent substrate surface, said coat being applied to said surface at least between the 34 mm and D mm diameters.

The construction arrangement of the high-density disk-shaped information carrier disclosed before is capable of providing the following advantages.

Provision of a substrate 0.57 to 0.67 thick at least in a segment confined between the 36 mm and (D-2) mm diameters, wherein D is an outside diameter of the carrier, allows of reducing characteristic dimensions of pits and the pitch thereof in the data-bearing zone (which is disposed as a rule over diameters in excess of 46 mm), thereby adding to the density of information recorded on the disk and maintaining a possibility of reading said information with a laser beam having a wavelength of from 635 to 650 nm, which eventually increases a total storage capacity of the medium to as high as 4.7 Gb. Aside from that, reduced substrate thickness in said segment thereof makes it possible to substantially decrease consumption of raw material (i.e., polycarbonate or polymethylmethacrylate necessary for manufacturing the carrier, and reduce its weight which in turn contributes to less stresses in the bulk of the substrate and to a lower rate of errors in data reading and/or recording, as well as renders the carrier more flexible and less brittle, accordingly.

Provision of an annular ridge (according to the first embodiment of the invention) disposed in the central substrate zone between the 16 mm and 21.5 mm diameters and having a total height (i.e., extending from the transparent substrate surface to the upper edge of the ridge) selected from a range of from 1.6 to 1.65 mm in combination with the substrate thickness of substantially 1.2 mm on a segment of 15 to 16 mm makes it possible to reliably fix the carrier in position and read and/or record data therefrom and thereon substantially in any standard modem reading and/or recording devices, notebook drives inclusive. In addition, such a construction arrangement of said ridge according to the first embodiment, contributes to a substantial reduction of stresses in the substrate central zone, which in turn reduces the rate of errors when reading information from the initial portion of the reproduction zone of the carrier, which errors have occurred not infrequently with the previous state of art, especially in storage media of the CD type.

Similar results are attainable when, according to a second embodiment of the invention, said annular ridge or collar is provided between the 15 mm and 18 mm diameters, has a maximum total height ranging from the same interval of from 1.6 to 1.65 mm and is provided with three single-type recesses each having a maximum depth selected from an interval of from 0.35 to 0.45 mm (i.e., with the proviso that the minimum distance between the surface of the recess and the substrate transparent surface falls within an interval of from 1.2 to 1.25 mm), and the centers of said recesses are spaced apart substantially equally (that is, they are spaced 120 degrees apart along a circle circumscribing said ridge). In addition, it is due to a still higher offset of the ridge towards the center hole that there is provided still more substantial lowering of stresses in the bulk of the substrate and, accordingly, a lower amount of errors in the initial portion of the data-bearing zone.

It is noteworthy that such a construction arrangement of the central portion of a carrier is not known heretofore nor is it obvious explicitly from the previous state of the art according to which the known information carriers have no substantial ridges in the central portion having substantially the same thickness of about 1.2 mm between the 15 mm and 22 mm diameters (that is, in the so-called clamping zone). In addition, said known carriers are held in position in disk drives with the trays devoid of holding means of their own, by being clamped with a thrust bush across the 26-32 mm diameters inside the drive, whereas in the disk drives having trays provided with a spindle carrying fixing means (as a rule appearing as three spherical latches spaced 120 degrees apart), the information carriers are fixed in place by being clamped with the aid of said fixing means nearby the center hole of said carrier. At the same time, construction arrangement of substantially every standard disk drive having trays less fixing means of its own enables one to reliably clamp the carrier disclosed in the first and second embodiments of the invention, against said annular ridge having a maximum total height of 1.6-1.65 mm within the limits of the 15-21.5 mm diameters. It is due to the provision of a substrate (as per the first embodiment) substantially 1.2 mm thick between the 15 mm and 16 mm diameters (i.e., between the center hole and the ridge inner surface) and due to the provision of the three appropriate recesses (as per the second embodiment) that the herein-proposed information carrier is fixed in disk drives provided with the trays furnished with the clamping means of their own (such drives being made use of particularly in a plurality of notebook models) in the same way as in the previous state of art.

Provision of an annular recess in the substrate transparent surface between the 16 mm and 20.5 mm diameters, said recess having its maximum depth is between 0.6-0.8 mm, makes it possible to further reduce stresses in the bulk of the substrate, which stresses may arise due to the provision, according to the first embodiment, of a solid annular ridge. Besides, a specific shape of said recess is inessential in this particular case.

### Brief Description of the Drawings

In what follows the present invention will now be illustrated in more detail with reference to the accompanying drawings, wherein:
FIG. is a view of a disk-shaped information carrier according to one of the particular cases of its realization within the scope of a first embodiment of the invention, appearing as a half of an axial cross-section;
FIG.2 is a plan view of a disk-shaped information carrier according to one of the particular cases of its realization within the scope of a first embodiment of the invention;
FIG.3 is a view of FIG.2 appearing as a half of an axial cross-section.

### Description of the Preferred Embodiment

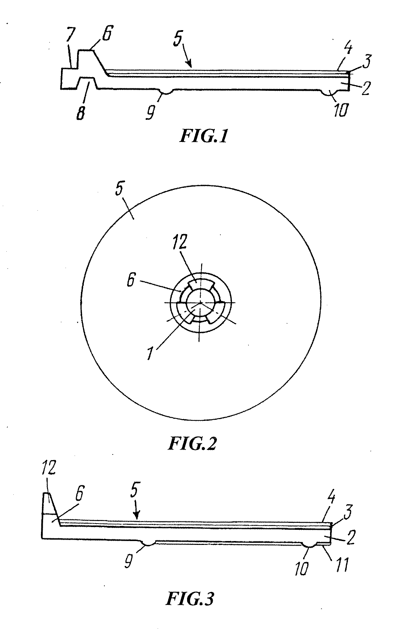

The information carrier of the present invention having a center hole 1 with a diameter substantially equal to 15 mm for its holding in a standard disk drive of reading/recording device (FIG.2) comprises a disk-shaped molded substrate 2 made from an optically transparent material, preferably optical polycarbonate or polymethylmethacrylate. Either of the sides of the substrate 2 (i.e., the lower one in FIGS. 1 and 3) through which information is read and/or recorded is smooth and transparent and at a portion of the other side thereof (that is the upper side in FIGS.1 and 3) is coated with a number of layers of materials applied in succession, said materials in combination with the molded substrate form an information side (surface) 5 of the carrier and provide for data recording and/or storing.

In particular, FIGS. and 3 illustrate specific cases of carrying out the invention, according to which the information carrier according to the first and second embodiments is in fact a prerecorded one and preferably manufactured using the injection molding replication process. In this particular case, a layer 3 is in effect a reflecting layer applied preferably by spraying on aluminum, silver, gold, silicon or other similar material possessing good reflecting properties in an operating range of wavelengths of standard reading devices (that is, 630-650 nm), whereas a layer 4 appears as the one of protective lacquer, aimed also at protecting the substrate metallized surface against damaging. The thickness of the reflecting layer 3 may be from 10 to 300 nm and that of the lacquer coat, from 4 to 2.5-50 µm. Moreover, provision is made in the prerecorded information carrier for a data-bearing micropattern disposed under the reflecting layer 3 on at least a portion of the substrate area, said micropattern appears as a combination of pits (microbulges or micropits) made during manufacture of the storage medium (not shown in the drawings), using die-casting technique.

When manufacturing a recordable or rewritable carrier according to the present invention, information is recorded, stored and read out is provided by other layer applying sequences well known heretofore from prior art. In particular, a recordable storage medium of the present invention comprises, instead of the aforementioned layer sequence "reflecting layer 3, and a coat 4 of lacquer" preferably a recording layer applied immediately to the upper substrate surface and made from a photorecording colorant (e.g., fluorocyanin), then a reflecting layer (as a rule, golden or silver), and atop of said layer, a protective layer of a photopolymerizable lacquer. A rewritable carrier of the present invention preferably comprises a first transparent heat-insulating layer applied to the substrate, next a recording layer made from a material capable of transiting from crystalline to amorphous state (that is, from transparent to opaque state), and vice versa under the effect of laser radiation, a second transparent heat-insulating layer, a reflecting layer, and a layer of photopolymerizable lacquer. In addition, preferably the information surface of the substrate in a recordable carrier and rewritable carrier of the present invention be provided with spiral track bearing markers for a recording/reading laser. Besides, a color label may in all cases be applied additionally atop of the lacquer coat, for visually identifying the carrier and information recorded therein.

Further on, according to the first embodiment, an annular ridge or collar 6 is provided in the central portion of the substrate 2 over the surface of its information side 5 between the 16 mm and 21.5 mm diameters such that a total thickness of the substrate 2 in said area, i.e., a distance from the plane comprising the substrate transparent surface to the top of the ridge is maximum 1.6 to 1.65 mm which quite enough for holding the carrier as per the first embodiment of the invention in substantially any heretofore-known drive of a reading/recording device. In addition, a pad 7 substantially 1.2 mm thick results between the 15 mm and 16 mm diameters which is sufficient for the information carrier to be held in standard disk drives having pull-out trays provided with spindles of their own with fixing means and used predominantly in notebooks.

An outer surface of the ridge 6 is preferably but not necessarily cone-shaped having a larger lower edge for easier removal of the medium from the mold; such being the case, the locus of the ridge 6 most removed from the plane comprising the substrate transparent surface forms a flat ring confined between the 16 mm and 19.5 mm diameters. In a given case, an inner surface of the ridge 6 is cylinder-shaped, though in other particular embodiments of the invention said surface may also be cone-shaped having a larger lower edge.

With a view to reducing stresses occurring in the bulk of the substrate 2 caused by the provision of the solid ridge 6 in the central portion thereof, it is expedient that an annular recess be made in the smooth transparent surface of the substrate whose maximum depth is selected from an interval of from 0.6 and to 0.8 mm, a specific shape of the surface of said recess 6 being immaterial in this particular case, though optimally the profile of the recess should replicate exactly that of the ridge 6 such that the substrate thickness between the surface of the ridge 6 and the surface of the recess 8 be fixed and approximately equal to 0.6 mm.

With a view to protecting the transparent surface of the substrate 2 against incidental damages (cracks, and the like), it is expedient that one or two annular ridges 9 and 10 (FIG.1) cast integral with the substrate 2 itself be provided. The ridge 9 has an inside diameter of 33.5 mm, a preferred width from 0.6 to 12 mm and a height selected from 0.15 to 0.20 mm. The ridge 10 has its inside diameter 2 mm smaller than that an outside diameter D of the entire carrier (which is preferably ranges from substantially 80 mm to substantially 120 mm, and taking account of production tolerance, from 79.9 to 120.1 mm). In addition, the ridge 10 is preferably 1 mm wide, its height being selected in the range of from 0.3 to 0.5 mm.

It is worth noting that in some embodiments of the invention it is expedient to apply an additional coat 11 (FIG.3) of the lacquer to at least a portion of the lower transparent surface of the substrate 2, said coat interfering with neither reading nor recording information using a laser beam, at the same time affording protection to the lens of a reading/recording device and/or to the surface of the carrier itself against damaging. In this particular case, use may be made of the so-called hard-couture or hard-coating, specifically, lacquers e.g. available from Dainippon Ink and Chemicals, Inc., Japan. The lacquer coat is reasonable to be applied to the data-bearing zone of the carrier confined as a rule between the 45 and 118 mm diameters for a 120 mm carrier and between the 45 and 78 mm diameters for a 80 mm carrier.

When applying the extra-coat 11 of the lacquer, at least a peripheral portion of the lower smooth surface of the carrier may be either plain (less the ridge 10) or be provided (instead of said ridge 10) with a number of pointlike microbulges spaced equally apart across the same diameter as said annular ridge 10 and having the same dimensions (that is, height and thickness). The pitch of said pointlike microbulges is preferable to be selected on the basis of a microbulge per 10 mm circle length or approximately thereto, correction being allowed for uniformity of mutual disposition of the pointlike microbulges along a corresponding circle. Provision of pointlike microbulges facilitates applying the extra-coat 11 of lacquer to the smooth transparent surface of the substrate 2 ensures against possible forming (whenever the ridge 10 is a solid structure) a thickening of said lacquer at the carrier periphery, as well as makes possible avoiding onset of excess stresses in the peripheral areas of the substrate 2. It is also worth noting that the substrate 2 may be made less microbulges 9 or annular ridges 10 whatever, but may therein have the coat 11 of protective lacquer applied to the smooth transparent surface thereof.

A second embodiment of the invention shown in FIGS.2 and 3 differs from the first one largely in realization of the central zone of the substrate.

Specifically, in such a case the substrate 2 is also provided with the annular ridge 6 but it is confined between the 15 mm and 18 mm diameters (e.g., between 15 and 17 mm). For holding the herein-proposed information carrier in standard drives of readers/recorders a maximum total thickness of the ridge 6 is equals, as in the first embodiment, from 1.6 to 1.65 mm, but for holding the carrier in drives whose trays are provided with the fixing means of their own, the ridge 6 is provided with three single-type, as to shape and size, recesses 12 spaced 120 degrees apart round the ridge circumference, a minimum spacing between the substrate transparent surface and the locus of each recess is from 1.2 to 1.25 mm. In various particular embodiments of the invention a specific surface shape of the recesses 12 may vary by those skilled in the art taking into account but a possibility of holding standard storage medium fixing means (particularly, appearing as a spindle carrying three fixing balls) to the recess 12.

Similar to the first embodiment, annular ridges 9 and 10 or pointlike microbulges may be provided on the smooth transparent surface of the substrate 2, and also an extra-coat 11 of the protective lacquer may be applied thereto.

In addition, in both cases the thickness of the substrate 2 at least between the 36 mm and the (D-2) mm diameters is by 2 mm smaller than the carrier outside diameter (i.e., e.g., 118 mm for a 120 mm medium and 78 mm for a 80 mm medium), in the data-bearing zone inclusive, is 0.57 to 0.67 mm, whereby, in particular, the record density may be increased as compared to the heretofore-known CD media and the storage capacity of the media according to the invention be approximated to that of single-layer DVD media.

The information carrier according to the present invention may be manufactured by the injection molding replication technique in heretofore-known equipment as a rule made use of for manufacturing compact disks according to known pressure molding technique involving minor changes and modifications of the production conditions of some operating steps and inconsiderable improvements in production equipment called forth by the novelty of the construction arrangement of the proposed information carrier.

At a first step of the production process a transparent substrate is manufactured using injection molding technique, from, e.g., optical polycarbonate (in particular, Makrolon^{™} available from Bayer Co., Lexan^{™} available from General Electric Co., Upilon^{™} available from Mitsubishi Co., or others) used for CD manufacture. During the manufacturing process of prerecorded carrier a data-bearing micropattern appearing as a combination of pits is impressed, with the aid of a preprepared die, on either of the substrate sides (in the area corresponding to the data-bearing zone whose dimensions may vary for the various types of disks). In particular, use may be made of a die which bears information recorded under conditions of constant linear velocity and a track pitch of 0.4 µm and over. When casting recordable or rewritable information carriers provision shall be made for appropriate spiral track bearing markers for data recording/rerecording/reading.

For making the annular ridge 6 according to the first or second embodiments (that is, with or without the recesses 12), a corresponding surface of a mold must have an appropriate recession(s) (or groove(s) corresponding, as to their size and location, to those of the annular ridge, as well as, whenever necessary, recesses therein. The recesses 12 according to the second embodiment may also be made after the substrate 2 with the ridge 6 has been cast. Similarly, a respective surface of the casting mold must have circular groove adapted to accommodate and be held in place a bulging insert having its outer surface fits in shape to a desired surface shape of the recess 8.

In order to avoid onset of excess stresses in the central portion of the carrier and accordingly to reduce the birefringent effect which happens to occur in the starting portion of the data-bearing zone (i.e., e.g., in R-information zone and/or in lead-in zone in DVDs), the initial polycarbonate injection rate can be reduced at least twice, whereas when molding the data-bearing zone the injection rate may be increased again to a standard level.

Once the substrate has been molded completely, it is cooled, whereupon coats are applied thereto to provide data storage and/or recording and/or reproducing.

In particular, when making a prerecorded carrier, at least a portion of the substrate surface containing data-bearing micropattern is metallized with aluminum or other reflecting material, whereby a reflecting coat is formed. It is specially noteworthy that in such a case there can be metallized not only the substrate surface portion provided with micropattern but also the entire surface. Further on, a coat of a photopolymerizable lacquer standard for the given aim is applied to the metallized medium surface using a standard centrifugal device (that is, centrifugal machine), whereupon the lacquer is subjected to ultraviolet curing in a LTV-kiln. When manufacturing recordable or rewritable carriers some modifications in the aforementioned procedure are concerned only with applying extra-coats (extra-layers) between the reflecting coat and the substrate surface which can be effected by resorting to techniques routine for a given field of engineering.

Next the information carrier thus manufactured is subjected to a quality control test at a test station, which is followed by rejecting spoiled media in accordance with the findings of the scanning procedure and revealing optical flaws. Then the carriers that have passed the QC test may further be forwarded for coloration in the course of which one or more color coats each 10 to 30 µm thick are applied to the lacquer coat and/or immediately to polycarbonate. The result is a colorful label which can bear information about the content of the carrier, its total storage capacity and present marking identifying the manufacturer's name (trademark, firm mark), and so on. It is desirable that the colored disks be once more inspected for amount of errors and coloration quality with the aid of an automatic test station.

A whole information carrier production cycle (the coloration procedure exclusive) is on the order of 4 s which is twice as low as the duration of the production cycle of a single-sided DVD of 4.7 Gb capacity. In addition, with an outside diameter of about 120 mm the resultant carrier has a weight of about 8.5 g which is nearly twice as low as the weight of DVD having a similar diameter. Hence nearly twofold saving of raw material (i.e., polycarbonate) is attainable as compared to DVD production. At the same time there is attainable a record density comparable with that of DVD which nearly eight times the record density attainable by a CD similar to the proposed carrier as to weight-and-size characteristics. Furthermore, the carrier being claimed is favorably comparable with heretofore known CD and DVD as being characterized by high performance reliability, including increased protectability of the data-bearing zone against incidental damages, as well as by higher manufacturability due to efficient and economical use of traditional production equipment and of materials well-known and widely used in a given field of art.

### Industrial Applicability

The present invention can find application in the most various fields of engineering for storing and recording up to 4.7 Gb of audio- and video information or data of other types using now existent up-to-date equipment for reproducing/recording DVD media (at a laser radiation wavelength of from 630 to 650 nm), as well as up to 15 Gb and over of such information using an up-and-coming equipment at a wavelength of from 405 to 450 nm and shorter). The herein-proposed carrier can be manufactured in standard production equipment used for making CD and DVD carriers and subjected to insignificant modifications of molds and ancillary equipment and minor changes in the molding process conditions, all this being called forth by novel geometric characteristics of the carrier claimed in the present invention.

## Claims

1. A disk-shaped information carrier having a center hole with a diameter substantially equal to 15 mm for holding the carrier in position in a reading device and comprising at least a molded substrate made of an optically transparent material and having its first side smooth and transparent and at least a portion of a second side thereof is coated with at least two layers of materials which form, in combination with the substrate, an information side of the carrier and provide data recording and/or storing, said layers comprising at least a reflecting layer and a lacquer coat, while an annular ridge is provided over the substrate surface on the information side thereof in the substrate portion confined between the 16 mm and 21.5 mm diameters such that a maximum distance between the plane comprising the substrate transparent surface and the upper edge of said ridge varies from 1.6 to 1.65 mm, and the substrate thickness at least between the 36 mm and (D-2) mm diameters, wherein D is an outside diameter of the carrier ranging from substantially 80 mm to substantially 120 mm, ranges between 0.57 and 0.67 mm, and that between the 15 mm and 16 mm diameters is substantially 1.2 mm.

2. The carrier of claim 1, **CHARACTERIZED in that** the inner surface of said ridge is cylinder-shaped and the outer surface thereof is conical, the radius of the upper edge of said surface being smaller than that of the lower edge.

3. The carrier of claim 1 or claim 2, **CHARACTERIZED in that** the locus of the ridge surface spaced a maximum distance apart from the plane comprising the substrate transparent surface, appears as a flat ring having its outside diameter smaller than or equal to 19.5 mm and its inside diameter larger than or equal to 16 mm.

4. The carrier of any one of claims 1-3, **CHARACTERIZED in that** an annular recess is provided in the smooth transparent surface of the substrate between the 16 mm and 20.5 mm diameters thereof, said recess having a maximum depth of from 0.6 to 0.8 mm.

5. The carrier of any one of claims 1-4, **CHARACTERIZED in that** an annular ridge is provided on the smooth transparent surface of the substrate, said ridge having a height selected from the range of from 0.15 to 0.20 mm, a width ranging substantially from 0.6 and 1.2 mm and an inside diameter being substantially 33.5 mm

6. The carrier of any one of claims 1-5, **CHARACTERIZED in that** a further annular ridge is additionally provided on the smooth transparent substrate surface, said ridge having a height substantially from 0.3 to 0.5 mm, a width substantially equal to 1 mm and an inside diameter of substantially (D-2) mm.

7. The carrier of any one of claims 1-4, **CHARACTERIZED in that** a number of pointlike microbulges are spaced equally apart round a dia. 34 mm circumference on the substrate smooth transparent surface, said microbulges having a height selected from a range of from 0.15 to 0.20 mm and a width ranging substantially from 0.6 to 1.2 mm.

8. The medium of any one of claims 1-4, 7, **CHARACTERIZED in that** a number of pointlike microbulges are spaced equally apart round a circumference having a diameter substantially equal to (D-1.5) mm on the substrate smooth transparent surface, said microbulges having a height substantially from 0.3 to 0.5 mm and a width substantially equal to 1 mm.

9. The medium of any one of claims 1-4, 7 or 8, **CHARACTERIZED in that** a coat of protective lacquer transparent to optical radiation is applied over the smooth transparent substrate surface, said coat being applied to said surface at least between the 34 mm and D mm diameters.

10. A disk-shaped information carrier having a center hole with a diameter substantially equal to 15 mm for holding the carrier in position in a reading device and comprising at least a molded substrate made of an optically transparent material and having its first side smooth and transparent and at least a portion of a second side thereof is coated with at least two coats of materials which form, in combination with the substrate, an information side of the carrier and provide data recording and/or storing, said coats comprising at least a reflecting layer and a lacquer coat, **CHARACTERIZED in that** an annular ridge is provided over the substrate surface on the information side thereof on the substrate portion confined between the 15 mm and 18 mm diameters such that a maximum distance between the plane comprising the substrate transparent surface and the upper edge of said ridge ranges from 1.6 to 1.65 mm, said ridge comprising three single-type recesses having their centers spaced equally apart, while a minimum distance between the transparent substrate surface and the surface of each recess is from 1.2 to 1.25 mm and the substrate thickness at least between the 36 mm and (D-2) mm diameters, wherein D is an outside diameter of the carrier ranging from substantially 80 mm to substantially 120 mm, ranges between 0.57 and 0.67 mm.

11. The carrier of claim 10, **CHARACTERIZED in that** the outer surface of said microbulge is cone-shaped and have cutouts in the areas of the recesses, the cross-sectional diameter of said surface increasing from its upper edge towards the lower one.

12. The carrier of claim 10 or claim 11, **CHARACTERIZED in that** the locus of the ridge surface spaced a maximum distance apart from the substrate transparent surface, appears as single-type portions of a flat ring separated by hollow spaces in the areas of said recesses, an outside diameter of each such portion being 18 mm or less, and an inside diameter being 15 mm or more.

13. The carrier of any one of claims 10-12, **CHARACTERIZED in that** an annular ridge is provided on the smooth transparent substrate surface, said ridge having a height selected from the range of from 0.15 to 0.20 mm, a width substantially ranging from 0.6 to 1.2 mm, and an inside diameter of substantially 33.5 mm.

14. The carrier of any one of claims 10-13, **CHARACTERIZED in that** one more annular ridge is further provided on the smooth transparent substrate surface, said ridge having a height ranging substantially from 0.3 to 0.5 mm, a width substantially equal to 1 mm and an inside diameter of substantially (D-2) mm.

15. The carrier of any one of claims 10-12, **CHARACTERIZED in that** pointlike microbulges may be spaced equally apart round a circumference having a diameter of 34 mm on the smooth transparent substrate surface, said microbulges having a height selected from 0.15 to 0.20 mm and a width ranging substantially from 0.6 to 1.2 mm.

16. The carrier of any one of claims 10-15, 15, **CHARACTERIZED in that** a number of pointlike microbulges are spaced equally apart round a circumference having a diameter substantially equal to (D-1.5) mm on the smooth transparent surface thereof, said microbulges having a height substantially ranging from 0.3 to 0.5 mm and a width substantially equal to 1 mm.

17. The carrier of any one of claims 10-12, 15, 16, **CHARACTERIZED in that** a coat of protective lacquer transparent to optical radiation is applied over the smooth transparent substrate surface, said coat being applied to said surface at least between the 34 mm and D mm diameters.
